# EUROPÄISCHE PATENTANMELDUNG

(11) **EP 1 598 314 A1**
(43) Veröffentlichungstag der Anmeldung: **23.11.2005**
(21) Anmeldenummer: 04011847.3
(22) Anmeldetag: 19.05.2004
(51) Int. Cl.: C02F 1/14, A01G 9/24

(54) **Vorrichtung und Verfahren zur Luftbefeuchtung, Raumklimatisierung und Energieübertragung insbesondere für den Einsatz von verschmutztem oder salzhaltigem Wasser**

(71) Anmelder: Buchholz, Martin, 10435 Berlin (DE); Jochum, Patrick, Dr., 13187 Berlin (DE); Kraus, Michael, 10999 Berlin (DE); Steffan, Claus, Prof., 80799 München (DE)
(72) Erfinder: Buchholz, Martin, 10435 Berlin (DE); Jochum, Patrick, Dr., 13187 Berlin (DE); Kraus, Michael, 10999 Berlin (DE); Steffan, Claus, Prof., 80799 München (DE)

(57) **Zusammenfassung**

Die Erfindung betrifft eine Vorrichtung und ein Verfahren zur Luftbefeuchtung in Gebäuden mit transparenten Oberflächen mit den Zielsetzungen der Raumkühlung durch steuerbare Beschattung und Wasserverdunstung bei gleichzeitiger Überführung der durch die Wasserverdunstung zwischengespeicherten Energie zu einem Wärmetauscher. Dabei wird der höhere Energiegehalt der feuchten Luft zur Verringerung der Lüftungsleistung genutzt und durch Kondensation des vorverdunsteten Wassers am Wärmetauscher der Wärmeübergang verbessert. Die Anlage ermöglicht die Aufbereitung von Wasser durch Destillation bei Verdunstung von salzhaltigem oder verunreinigtem Wasser und anschließender Kondensation.

## Beschreibung

Die Erfindung betrifft eine Vorrichtung und ein Verfahren zur Luftbefeuchtung in Gebäuden mit transparenten Oberflächen mit den Zielsetzungen der Raumkühlung durch Wasserverdunstung und der Überführung der durch die Wasserverdunstung zwischengespeicherten Energie zu einem Wärmetauscher, bei Nutzung des höheren Energiegehalts der feuchten Luft zur Verringerung der Lüftungsleistung und bei verbessertem Wärmeübergang durch Kondensation des zuvor verdunsteten Wassers am Wärmetauscher. Zudem ermöglicht die Anlage die Aufbereitung von Wasser durch Destillation bei Verdunstung von salzhaltigem oder verunreinigtem Wasser und anschließender Kondensation.

Neben der Raumkühlung durch die Befeuchtung von Luft am Lüftungseintritt bzw. zusätzlich im Gewächshaus am Boden und über die Bepflanzung existieren gemäß dem Stand der Technik Luftbefeuchter, die einen Kühleffekt durch die sogenannte Zerstäubung oder Vemebelung von Wasser in der erwärmten Luft bewirken. Diese Wasservemebelung hat im Vergleich zu den vorgenannten Maßnahmen der Luftbefeuchtung den Vorteil, dass bereits im Raum erwärmte Luft nachträglich gekühlt wird und die erhöhten Temperaturen mit entsprechend höherer Wasseraufnahmefähigkeit zu einer effektiveren Kühlleistung führen, ohne durch zusätzliche aparative Aufbauten den genutzten Raum zu beschatten. Durch das Zerstäuben wird verhindert, dass der Boden bzw. der Vegetationsbereich mit Wasser benetzt wird, da die Verdunstung vor dem Auftreffen der winzigen Tropfen stattfindet. Zudem wird eine Verschattung des Raumes verhindert oder zumindest minimiert.

Die Nutzung der Wasserverdampfung im Rahmen von solaren Luftkollektoren mit Überführung der durch die Wasserverdunstung zwischengespeicherten Energie zu einem Wärmetauscher einschließlich der Nutzung des Kondensats ist bekannt. EP965264 ¹ beschreibt die Überführung von warmfeuchter Luft zu einem Wärmetauscher über eine durch Luftauftrieb und anschließenden Luftabtrieb verursachte Kreislaufbewegung bei Erwärmung/Befeuchtung und anschließender Abkühlung/Entfeuchtung der Luft innerhalb von zwei verschiedenen Raumzonen. EP315556 ² beschreibt den Einsatz der Wasserzerstäubung zwischen zwei transparenten Schichten im Dachbereich von Gewächshäusern oder anderen transparenten Bauten bei anschließender Überführung der befeuchteten Luft zu einem Speichersystem.
^{**1**} **Buchholz, Martin 1999,** EP965264: Anlage und Verfahren zum Überführen und Nutzen von Wärme und/oder Wasserdampf aus Gewächshäusern und/oder Solid State Fermentationsanlagen
² **Helary, Dominique 1989,** EP0315556: Process and device for the ventilation heating, regulation and air conditioning of buildings, building making use thereof and process for laying their foundations.

Der Ansatz der Wasserzerstäubung besitzt den entscheidenden Nachteil, dass zur Kühlung hochwertiges, sauberes und damit teures Wasser eingesetzt werden muss. Wassertropfen, die Inhaltsstoffe wie z.B. Salze, Keime oder Sporen enthalten, bzw. nach Verdunstung des Wassers ausschließlich diese Inhaltsstoffe, würden unkontrolliert auf den Boden bzw. auf eine vorhandene Zwischenebene fallen. Die Inhaltsstoffe würden sich in diesen Bereichen anreichern oder aber über den Lufttransport als Aerosol am Wärmetauscher im Kondenswasser gelöst bzw. dispergiert werden, was eine Verwendung des Kondensats erschweren bzw. unmöglich machen würde.

Der Erfindung liegt die Aufgabe zugrunde, eine Vorrichtung und ein Verfahren zur Luftbefeuchtung, Raumklimatisierung und Energieübertragung, insbesondere für den Einsatz von verschmutztem oder salzhaltigen Wasser bereitzustellen. Diese Aufgabe wird mit den Merkmalen der Patentansprüche gelöst. Um kostengünstiges Salzwasser oder verunreinigtes Wasser als Kühl- bzw. Energiespeichermedium verwenden zu können und um dieses Wasser über den ablaufenden Verdunstungs- und Kondensationsprozess wieder zu nutzbarem Wasser aufzubereiten, werden erfindungsgemäß diese Stoffe entweder während dem Prozess eliminiert oder aber so akkumuliert, dass eine kontrollierte Entfernung aus dem System möglich wird.

Die Erfindung geht dabei von dem Grundgedanken aus, einen Wasserfilm direkt auf einer geneigten Kollektorfläche oder aber auf einer ebenfalls geneigten transparenten Oberfläche (z.B. in der Nähe eines Kollektor- bzw. Beschattungselementes) zu verteilen. Durch die Verteilung auf einer geneigten Oberfläche kann das zu verdunstende Wasser zu- und auch wieder abgeführt werden. Inhaltsstoffe können durch die Kreislaufführung des Wassers eingedickt werden. Zudem wird eine große Oberfläche mit Luftkontakt erzeugt, die eine biologische Reinigung des Wassers begünstigt. Durch die Ausrichtung gegen die Sonne können insbesondere bei Verwendung eines UV-strahlungsdurchlässigen Dachmaterials und bei Verwendung von als Katalysator wirkenden Beschichtungen bzw. Additiven zusätzliche fotooxidative Reinigungseffekte erzielt werden.

Der Wasserfilm kann entweder durch die Verteilung von Wasser über einen perforierten Schlauch an einem oberen Ende der geneigten Oberfläche gebildet werden, und/oder insbesondere bei sehr schwach geneigten Oberflächen über Sprinkler- bzw. Beregnungsdüsen gleichmäßig über großflächige Segmente der Oberfläche. Wird zudem die Gesamtoberfläche des Wassers durch die in der Luft befindlichen Tropfen stark vergrößert und die Verdunstungsleistung entsprechend erhöht. Durch die Absorption und Reflektion des Sonnenlichts durch die in der Luft befindlichen Wassertropfen kann ein weiterer Beschattungseffekt erzielt werden, der durch Variierung des Wasserdurchsatzes gesteuert werden kann.

In Kombination mit einer regulierbaren Beschattungsvorrichtung bietet sich die Möglichkeit, das einfallende Sonnenlicht entsprechend dem solarem Angebot und dem jeweiligen Belichtungsbedarf entweder stärker für die Besonnung von Gebäudeinnenräumen bzw. von Gewächshauspflanzen zu nutzen, oder aber - verbunden mit einem Kühleffekt in diesem Bereich - zur Energie- und Feuchtigkeitsanreicherung der Luft in der Dachebene mit dem Ziel der Überführung von Wärme und Wasserdampf über einen Luftstrom zu einem Wärmetauscher bei Abführung und Nutzung der Wärme und des entstehenden Kondensats.

Der Einsatz eines Wasserfilms in Verbindung mit einer Schattierungsfunktion ermöglicht auch die Verwendung von Sonnenlicht absorbierenden Materialien, die im Wasserfilm selbst kontrollierbar angereichert werden und die in dieser Form das Kollektorelement darstellen. Beim Einsatz von Meerwasser mit der Zielsetzung der Entsalzung kann beispielsweise die Konzentration des gelösten Salzes bereits den benötigten Schattierungseffekt darstellen. Die Regulierung der Beschattung kann dann über die unterschiedliche Verdünnung oder Eindickung des den Film bildenden Salzwassers erfolgen.

Eine weitere Möglichkeit besteht im Einsatz von Algen im Wasserfilm. Durch die tägliche Ernte in Form des Abschiebens eines Algenbelags von dem transparenten Trägermaterial oder durch das Auswechseln oder Verdünnen des Wassers am Nachmittag kann einerseits die Transparenz der Oberfläche entsprechend der nachlassenden Strahlungsleistung der Sonne erhöht werden. Die verbleibenden Nachmittagsstunden und die Vormittagsstunden des folgenden Tages können sodann zum erneuten Aufbau des Algenbewuchses genutzt werden, um in den Mittagsstunden erneut den beim Strahlungsmaximum gewünschten Beschattungseffekt zu erzielen.

Ebenso ist eine Ernte beispielsweise zu Beginn einer Jahreszeit mit geringer Sonnenscheindauer möglich oder abhängig von dem gewünschten Temperatur- oder Energiebedarf in der Vorrichtung

Eine weitere Variante dieser Form der Beschattung besteht in der Zugabe von Additiven in die Wasserschicht, die je nach Bedarf zugeführt und je nach Regulierungsbedarf, beispielsweise durch Absetzen, Zentrifugieren oder, bei metallischen Additiven, durch Magnete wieder entfernt werden.

Die Vorrichtung kann auch zusätzlich oder alternativ zu den beschriebenen Funktionen der Luftbefeuchtung und der Energierückhaltung zur photokatalytischen Wasserreinigung eingesetzt werden, indem die Kollektoroberfläche und/oder das zur Beschattung im Wasser befindliche Additiv mit einem als Katalysator wirkenden Material beschichtet wird.

Die im System befindliche Luft kann als geschlossenes System im Kreis geführt werden, indem die Luft zwischen Wasserfilm und transparenter Abdeckung erwärmt und befeuchtet wird wobei die Luft in einen benachbarten Raum geführt wird, in dem die Wärme und das verdunstete Wasser über einen Wärmetauscher abgeführt wird. Die Luft kann von hier aus direkt über einen Rückführschacht oder indirekt durch den unter dem Wasserfilm liegenden Raum, z.B. den eigentlichen Vegetationsraum in einem Gewächshaus oder einem Wintergarten oder einem Raum in einem Gebäude, wieder in den erstgenannten Raum zurückgeführt werden.

In einem offenen System kann Außenluft direkt von außen oder indirekt über den unter dem Wasserfilm liegenden Raum zwischen die transparente Abdeckung und den Wasserfilm geführt werden. Anschließend wird die Luft dann über den Raum mit Wärmetauscher wieder nach Außen geführt

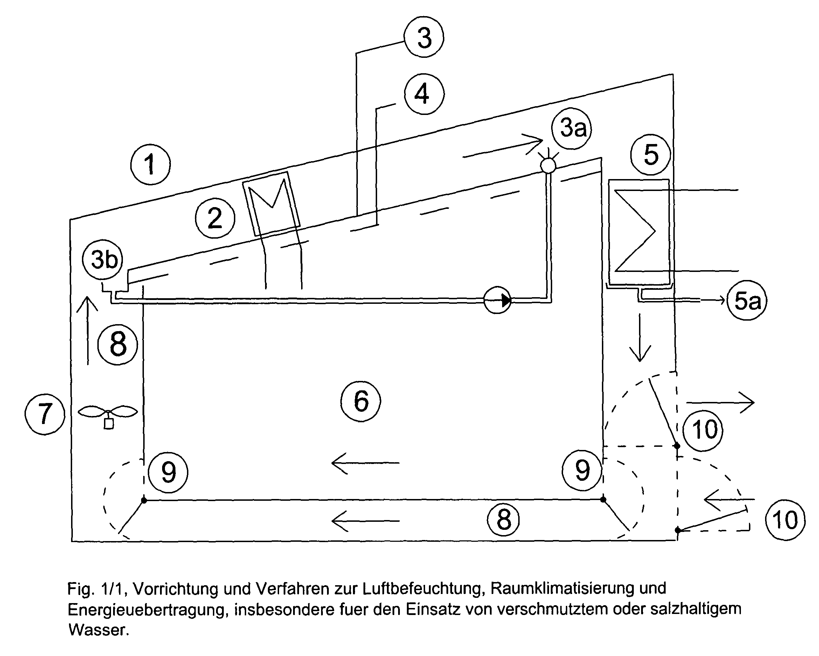

Die Erfindung wird nachstehend anhand der Zeichnung näher erläutert. Es zeigt Figur 1 eine Prinzipdarstellung einer bevorzugten Ausführungsform der Erfindung.

Im Folgenden wird die Funktionsweise einer bevorzugten Ausführungsform der erfindungsgemäßen Vorrichtung und des erfindungsgemäßen Verfahrens am Beispiel der in der Figur aufgezeigten Anordnung näher beschrieben. Die Vorrichtung weist eine transparente Abdeckung 1, ein Kollektorelement 4, einen zwischen den vorgenannten Teilen befindlichen, mit Luft gefüllten Zwischenraum 2, eine am Kollektorelement 4 befindliche Wasserfläche 3, einen Raum mit darin angeordnetem Wärmetauscher 5 und einen nutzbaren Raum 6 auf. Die Elemente werden dabei so verbunden, dass die im Zwischenraum 2 befindliche Luft durch die solare Einstrahlung auf die Wasserfläche 3 und auf die Kollektoroberfläche erwärmt, durch das Wasser befeuchtet und durch Luftbewegung über natürlichen Auftrieb und optional zusätzlich über erzwungene Lüftung mit Hilfe eines Ventilators 7 zu dem anschließenden Raum mit darin angeordnetem Wärmetauscher 5 und über einen Rückführschacht 8 zum Zwischenraum 2 zurückgeführt wird. Das Wasser zur Bildung der Wasserfläche 3 wird dabei durch eine Verteileinrichtungen 3a verteilt und durch eine geneigte Anordnung des Kollektorelementes von der oberen zur unteren Seite geführt. Der dabei nicht verdunstete Wasseranteil wird durch eine Auffangeinrichtung 3b eingesammelt und zur Verteileinrichtung zurückgepumpt. Der am Wärmetauscher 5 kondensierende Wasseranteil wird über eine Auffangvorrichtung 5a gesammelt.

Durch die Variierbarkeit der Transparenz des Kollektorelementes kann nun auf unterschiedliche Klimabedingungen und Nutzungspräferenzen reagiert werden, indem bei höherer Transparenz insbesondere der nutzbare Raum 6 belichtet wird und bei niedrigerer Transparenz insbesondere Solarenergie abgeführt wird. Bei der Abführung von Solarenergie kann durch die Verdunstung von Wasser über die Wasserfläche 3 die entstehende fühlbare Wärme der Luft in latente Wärme umgewandelt werden. Hierdurch kann einerseits der benötigte Volumenstrom der Luft zur Überführung der eingestrahlten Energie vom Kollektor zum Wärmetauscher verringert und damit Ventilationsleistung eingespart werden. Zudem wird der Wärmeübergang in ein Speichermedium verbessert, wenn die in der Luft enthaltene Feuchtigkeit beim Abkühlen am Wärmetauscher wieder kondensiert.

Die beiden Funktionen des Kollektorelementes 4, sind einerseits variabel den Durchlass des Sonnenlichts zu drosseln und gleichzeitig eine dichte Trägerunterlage für die Wasserfläche zu bilden. Hierzu wird vorzugsweise ein zweischichtiger Aufbau in Form einer transparenten Folie und einem darunter liegenden, ausfahrbaren Beschattungsnetz bereitgestellt.

Die Abbildung zeigt verschiedene Varianten einer möglichen Luftführung. Die Luft kann entweder im Kreis geführt werden und dabei über einen Schacht 8 um den nutzbaren Raum 6 herum geführt werden, beispielsweise wenn der nutzbare Raum ein Wohnraum ist, in dem keine übermäßig hohe Luftfeuchtigkeit gewünscht wird. Weiterhin kann die Luft im Kreis geführt werden und dabei durch den nutzbaren Raum hindurch geführt werden, beispielsweise wenn der Nutzbare Raum ein Gewächshaus ist, in dem ein hoher Strahlungsanteil zur Belichtung von Pflanzen benötigt wird, und bei dem dieser Strahlungsanteil ebenfalls über den Luftstrom in Form von fühlbarer und latenter Wärme zum Wärmetauscher geführt und die Luft vor dem Wiedereintritt in den nutzbaren Raum abgekühlt und entfeuchtet werden soll. Eine weitere Variante besteht in einem offenen Luftstrom, in dem Außenluft direkt in den Zwischenraum 2 oder über den nutzbaren Raum 6 in den Zwischenraum 2 geführt wird, und nach der Passage des Raums mit Wärmetauscher 5 das System wieder verlässt. Das Feuchtigkeitssättigungsdefizit der Außenluft kann bei dieser Variante durch die Wasserverdunstung über Pflanzen im nutzbaren Raum bzw. durch die Verdunstung über die Wasserfläche 3 genutzt werden, um den nutzbaren Raum zu kühlen oder um entstehende Kaltluft über einen weiteren Wärmetauscher 11 im Zwischenraum 2 indirekt zur Kühlung des nutzbaren Raums oder zur Kühlung eines anderen Mediums heranzuziehen.

Durch die Einfügung von Lüftungsöffnungen (9 und 10) können diese unterschiedlichen Varianten der Luftfuhrung entweder als alternative Ausführungsformen, oder bei der Ausführung vorzugsweise in Form von Klappen in den Lüftungsöffnungen als eine zeitlich hintereinander variierbare Ausführungsform verwendet werden. Im einzelnen sind in dem gezeigten Beispiel eine Klappe 9 für die Zuleitung von Luft in den nutzbaren Raum 6 und eine Klappe 9 für die Ausgabe von Luft aus dem nutzbaren Raum 6 vorgesehen. Weiterhin ist eine erste Klappe 10 gezeigt, über die Luft aus dem System an die Umgebung abgegeben werden kann und eine zweite Klappe 10, über die Luft aus der Umgebung in das System zugeführt wird.

Die vorliegende Erfindung ist insbesondere auf folgenden Gebieten technisch anwendbar. Hierzu gehört der Einsatz als Strahlungswärmetauscher und zur thermischen Solarenergienutzung, die Klimatisierung von Gewächshäusern, die Klimatisierung von Wohn- und Bürogebäuden, die Wasserreinigung und die Meerwasserentsalzung.

Die Erfindung ist nicht auf das vorstehende Beispiel einer bevorzugten Ausführungsform begrenzt sondern kann durch Variationen an die zuvor genannten Anwendungsmöglichkeiten angepasst werden. Dabei können einzelne Elemente allein oder in Kombination mit einem anderen Element oder mehreren anderen Elementen in einem solchen System eingesetzt werden.

## Patentansprüche

1. Vorrichtung mit einer transparenten Abdeckung (1), einem Kollektorelement (4), einem zwischen dem Kollektorelement (4) und der transparenten Abdeckung (1) befindlichen, mit Luft gefülltem Zwischenraum (2), einer an dem Kollektorelement (4) befindlichen Wasserfläche (3), einem Raum mit darin angeordnetem Wärmetauscher (5) und einem nutzbaren Raum (6), die derart miteinander verbindbar sind, dass die im Zwischenraum (2) befindliche Luft durch die solare Einstrahlung auf die Wasserfläche (3) und auf die Kollektoroberfläche erwärmt, durch das Wasser befeuchtet und durch Luftbewegung über natürlichen Auftrieb und/oder über erzwungene Lüftung mit Hilfe eines optionalen Ventilators (7) zu dem anschließenden Raum mit darin angeordnetem Wärmetauscher (5) transportiert wird und über einen Rückfuhrschacht (8) zum Zwischenraum (2) zurückgeführt wird, wobei das Wasser zur Bildung der Wasserfläche (3) durch eine oder mehrere Verteileinrichtungen (3a) verteilt, durch eine geneigte Anordnung des Kollektorelements von der oberen zur unteren Seite fließt und bei der der nicht verdunstete Wasseranteil durch eine Auffangeinrichtung (3b) eingesammelt und zur Verteileinrichtung zurückgepumpt wird und bei der der am Wärmetauscher (5) kondensierende Wasseranteil über eine Auffangvorrichtung (5a) gesammelt wird.

2. Vorrichtung nach dem vorstehenden Anspruch, bei der das Kollektorelement (4) aus einem transparenten Material besteht, oder aus einem vorzugsweise in der Oberflächengröße veränderbaren, opaken bzw. teilopaken Material besteht oder aus einer übereinander oder nebeneinander angeordneten Kombination beider vorgenannten Materialien besteht.

3. Vorrichtung nach den vorstehenden Ansprüchen, bei der derjenige Anteil der durch die transparente Abdeckung (1) einfallenden Solarstrahlung, der zu einem gegebenen Moment nicht zur Belichtung des unter- bzw. hinter der Wasserfläche liegenden, nutzbaren Raumes (6) benötigt wird, vor dem Eintritt in diesen Raum (6) mittels der Kollektorelementoberfläche und der Wasseroberfläche (3) in sensible und/oder latente Wärme umgewandelt wird, wobei die Veränderbarkeit der Transparenz der Kollektor- bzw. Wasserfläche durch das Variieren der Größe der Kollektorelementoberfläche (4) oder durch Verwendung eines Kollektorelementes mit elektrochromer oder thermochromer Transparenzvariabilität oder durch das Variieren der durchlaufenden Wassermenge oder durch das Variieren der Konzentration von im durchlaufenden Wasser gelösten bzw. dispergierten Inhaltsstoffen oder durch eine Kombination der vorgenannten Maßnahmen ermöglicht wird.

4. Vorrichtung nach den vorstehenden Ansprüchen, bei der das Wasser zur Bildung einer gleichmäßigen Wasseroberfläche aus der Verteileinrichtung über Sprinklerelemente so verteilt wird, dass das Luftvolumen des Zwischenraumes (2) durch den sich auf der Kollektorelementoberfläche bildenden Wasserfilm (3) und zusätzlich durch die aus den Sprinklerelementen austretenden, in der Luft befindlichen Tropfen befeuchtet wird, wobei die Anreicherung von im Wasser gelösten oder dispergierten Inhaltsstoffen auf der Kollektorelementoberfläche sowie in der Luft als Aerosol und anschließend im Kondensat verhindert wird über die Einstellung einer Mindestdurchflussmenge des Wasserfilms und über die Einstellung einer Mindesttropfengröße (hoher Volumenanteil an Tropfen > 0,2 mm) bei den Sprinklerdüsen.

5. Vorrichtung nach den vorstehenden Ansprüchen, bei der die Oberfläche des Kollektorelementes, welche in direktem Kontakt mit dem Wasserfilm ist (4) und/oder ein im Wasserfilm dispergierter Inhaltsstoff zur Ermöglichung einer photokatalytischen Wasserreinigung ganz oder teilweise aus einem Katalysatormaterial besteht, und bei der die transparente Abdeckung (1) aus einem UV-strahlungsdurchlässigen Material besteht.

6. Vorrichtung nach den vorstehenden Ansprüchen, bei der durch die Einrichtung von Lüftungswegen (9) zwischen dem Raum mit darin angeordnetem Wärmetauscher (5) und dem nutzbaren Innenraum (6) sowie zwischen dem nutzbaren Innenraum (6) und dem Zwischenraum (2), der in den nutzbaren Raum einfallende Anteil der Solarstrahlung zusätzlich über den Luftstrom abgeführt und damit dem Wärmetauscher zugeführt werden kann.

7. Vorrichtung nach den vorstehenden Ansprüchen, bei der durch die Einrichtung von Lüftungswegen (10) Außenluft direkt von außen oder indirekt über den nutzbaren Innenraum (6) in den Zwischenraum (2) strömt und diese von hier aus über den Raum mit darin angeordnetem Wärmetauscher (5) strömt und anschließend wieder an die Umgebung abgegeben wird, so dass ein offene Durchzuglüftung entsteht.

8. Vorrichtung nach den vorstehenden Ansprüchen, wobei die bei der Zuströmung von Außenluft beim Eintritt in den Zwischenraum (2) über die Wasseroberfläche erzeugte Verdunstungskälte über einen im Strömungsweg des Zwischenraums (2) angeordneten, zusätzlichen Wärmetauscher (11) abgeführt wird und dabei zur Kühlung des nutzbaren Raums (6) oder eines anderen zu kühlenden Mediums eingesetzt wird.

9. Verfahren insbesondere unter Einsatz einer Vorrichtung nach mindestens einem der vorstehenden Ansprüche 1 bis 8 mit den Schritten:
Einstrahlen von Sonnenlicht durch eine transparente Abdeckung (1) auf eine Kollektorfläche (4) auf der eine Wasserfläche (3) ausgebildet ist,
Weiterleiten der in einem Zwischenraum (2) zwischen der transparenten Abdeckung (1) und der Kollektorfläche (4) erwärmten und mit Wasser befeuchteten Luft zu einem anschließenden Raum mit darin angeordnetem Wärmetauscher (5),
Zurückführen der abgekühlten und entfeuchteten Luft über einen Rückfuhrschacht (8) zu dem Zwischenraum (2),
wobei die Wasserfläche (3) gebildet wird, indem Wasser durch eine oder mehrere Verteileinrichtungen (3a) auf der Kollektorfläche (4) verteilt wird, und das Wasser durch eine geneigte Anordnung der Kollektorfläche von der oberen zur unteren Seite fließt und bei der der nicht verdunstete Wasseranteil durch eine Auffangeinrichtung (3b) eingesammelt und zur Verteileinrichtung zurückgepumpt wird und bei der der am Wärmetauscher (5) kondensierende Wasseranteil über eine Auffangvorrichtung (5a) gesammelt wird.

10. Verfahren nach Anspruch 9, mit den weiteren Schritten:
Verändern der Transparenz der Kollektor bzw. Wasseroberfläche durch Variieren der Größe der Kollektorelementoberfläche (4) oder durch Verwenden eines Kollektorelements mit elektrochromer oder thermochromer Transparenzvariabilität oder durch das Variieren der durchlaufenden Wassermenge oder durch das Variieren der Konzentration von im durchlaufenden Wasser gelösten bzw. dispergierten Inhaltsstoffen oder durch eine Kombination der vorgenannten Maßnahmen.

11. Verfahren nach Anspruch 9 oder 10 mit den weiteren Schritten:
Befeuchten der Luft im Zwischenraum (2) mittels Sprinklerelementen,
Einstellen einer Mindestdurchflussmenge des Wasserfilms und Einstellen einer Mindesttropfengröße (hoher Volumenanteil an Tropfen >0,5 mm) bei den Sprinklerdüsen.

12. Verfahren nach mindestens einem der Ansprüche 9 bis 11 mit den Schritten
Erwärmen und Belichten eines nutzbaren Innenraums (6) wobei die Sonnenstrahlen durch die Kollektorfläche (4) und die darauf befindliche Wasserfläche (3) durchgelassen wird und vorzugsweise Weiterleiten der in dem nutzbaren Innenraum so vorhandenen Luft zum Zwischenraum (2) und Einleiten von Luft die den Wärmetauscher (5) durchlaufen hat in den nutzbaren Innenraum (6).

13. Verfahren nach mindestens einem der Ansprüche 9 bis 12 mit den Schritten:
Einleiten von Außenluft direkt von Außen oder indirekt über den nutzbaren Innenraum (6) in den Zwischenraum (2) und abgeben von Luft, die den Wärmetauscher (5) durchlaufen hat, an die Umgebung.

14. Verfahren nach mindestens einem der Ansprüche 9 bis 13 mit dem Schritt:
Kühlen des nutzbaren Raums (6) oder eines anderen zu kühlenden Mediums mittels eines Wärmetauschers (11) der im Strömungsweg des Zwischenraums (2) angeordnet ist.
